# EUROPEAN PATENT SPECIFICATION

(11) **EP 2 577 233 B1**
(45) Date of publication and mention of the grant of the patent: **24.02.2016**
(21) Application number: 11717318.7
(22) Date of filing: 20.04.2011
(51) Int. Cl.: G01H 9/00, G01D 5/353

(54) **OPTICAL SENSING SYSTEM WITH REDUNDANT INPUT AND OUTPUT TREES**
OPTISCHES SENSORSYSTEM MIT REDUNDANTER EIN- UND AUSGANGS-BAUMSTRUKTUR
SYSTÈME DE DÉTECTION OPTIQUE AVEC STRUCTURES ARBORESCENTES REDONDANTES D'ENTRÉE ET DE SORTIE

(30) Priority: 28.05.2010 GB 201008933
(43) Date of publication of application: 10.04.2013
(73) Proprietor: Stingray Geophysical Ltd., The Surrey Research Park Guildford Surrey GU2 7YG (GB)
(72) Inventor: FELLS, Julian, Horsham Sussex RH12 5NY (GB); AUSTIN, Edward, Netley Abbey SO31 5AE (GB); NASH, Philip, London SW8 2AZ (GB)
(74) Representative: Cordina, Kevin John
(86) International application number: PCT/GB2011/050789
(87) International publication number: WO 2011/148154

(56) References cited:
- EP-A2- 2 081 053
- GB-A- 2 449 941
- US-B1- 6 256 588

## Description

### Background

This invention relates to optical monitoring systems, and in particular to the improved resiliency of optical monitoring systems.

Optical sensors provide a convenient method of monitoring a range of physical properties of a location. The relative simplicity and robustness of optical sensors and the ability to locate the sensor significant distances from more complex interrogation hardware make optical systems particularly attractive where the sensor is to be located in hostile environments.

A particular family of optical sensing systems utilises a light source and detector (interrogator) located at a convenient interrogator location some distance from the actual sensors, with a fibre optic connection between. A particular application of such sensing systems is the marine oil and gas industry for seismic sensing, where the sensors are located on the sea floor and the interrogation location is on a surface platform or vessel.

The location of sensors in remote and hostile environments, and the link between the sensors and the interrogation location, present reliability concerns for such systems. Access to the sensors and connection for repair and maintenance may be difficult and therefore low failure rates and tolerance of failures is of significant importance.

EP2081053 discloses an optical sensing system comprising a plurality of optical sensors functionally coupled to a source fiber, at least one signal return fiber extends substantially along the entire length of the cable and is functionally coupled to an output of each of the optical sensors. The at least one source light fiber and the at least one signal return fiber are configured to be coupled at either end thereof to a respective one of a light source and a photodetection device.

There is therefore a requirement for optical sensing systems with improved reliability and tolerance of failures.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided an optical sensing system, comprising a plurality of optical sensors, a first input tree, each sensor being optically connected to a first optical input via the first input tree, wherein the first input tree is configured to direct signals from the first input to sensors, a second input tree, each sensor being optically connected to a second optical input via the second input tree, wherein the second input tree is configured to direct signals from the second input to sensors, a first output tree, each sensor being optically connected to a first optical output via the first output tree, the first output tree being configured to direct signals from each sensor to the first optical output, and a second output tree, each sensor being optically connected to a second optical output via the second output tree, the second output tree being configured to direct signals from each sensor to the second optical output, wherein the first input tree is configured to direct signals of particular wavelengths from the first input to particular sensors and/or the first output tree is configured to direct signals of particular wavelengths from particular sensors to the first output, and the second input tree is configured to direct signals of particular wavelengths from the second input to particular sensors and/or the second output tree is configured to direct signals of particular wavelengths from particular sensors to the second output.

The wavelength directed to each sensor by the first input tree may be different to the wavelength directed to the same sensor by the second input tree.

The first output tree may be configured to direct the particular wavelengths directed to each sensor by the first input tree from each sensor to the first output.

The second output tree may be configured to direct the particular wavelengths directed to each sensor by the second input tree from each sensor to the second output.

The first input tree and first output tree may have the same optical structure but are traversed in opposite directions by signals in the system.

The second input tree and second output tree may have the same optical structure but are traversed in opposite directions by signals in the system.

The signal wavelengths directed to each sensor by the first and second input trees may be selected from the same set of wavelengths, with each of the set of wavelengths being directed to at least one sensor by the first input tree and at least one sensor by the second input tree.

The optical sensing system may further comprise an optical source connected to the first input, the optical source configured to provide an optical signal at each of the wavelengths directed to sensors by the first input tree.

At least one of the input and output trees may comprise a hierarchy of wavelength selective couplers.

The optical sensing system may further comprise at least one reference unit, wherein a first wavelength is directed to that reference unit by the first input tree and a second, different, wavelength is directed to that reference unit by the second input tree.

There is also provided a method of reconfiguring an optical sensing system as described hereinbefore and an optical source outputting a plurality of wavelengths coupled to the first input, the method comprising the steps of determining a failure of one of the wavelengths of the optical source, and directing a wavelength via the second input to interrogate sensors previously interrogated by the failed wavelength via the first input.

There is also provided a method of reconfiguring an optical sensing system as described hereinbefore and an optical source outputting a plurality of wavelengths coupled to the first input, comprising the steps of determining a failure in the sensing system, and directing a wavelength via the second input to interrogate sensors no longer accessible via the first input.

The wavelength directed via the second input may be different to the wavelength previously interrogating the sensors via the first input.

There is also provided a method of operating an optical sensing system as described hereinbefore, the method comprising the steps of inputting at least a first signal to the first input and a second signal to the second input, wherein the first and second wavelengths are different and are selected such that they are directed to the same sensor by the first and second input trees, and detecting the first signal output from the first output and the second signal output from the second output.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figures 1 and 2 show schematic diagrams of an optical sensor region;
Figures 3 to 5 show schematic diagrams of potential breaks in the sensor region of Figure 2;
Figure 6 shows a schematic diagram of the layout of an optical sensor system;
Figure 7 shows a schematic diagram of the layout of an optical sensor system with redundant optical paths;
Figure 8 shows a schematic diagram of the layout of an optical sensor system with redundant optical paths and an exemplary break;
Figure 9 shows a schematic diagram of a pair of optical sensor regions;
Figures 10 to 12 show schematic diagrams of optical interface unit coupler arrangements and references; and
Figures 13 to 14 shows schematic diagrams of a pair of optical sensor regions and alternative interrogation system configurations.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

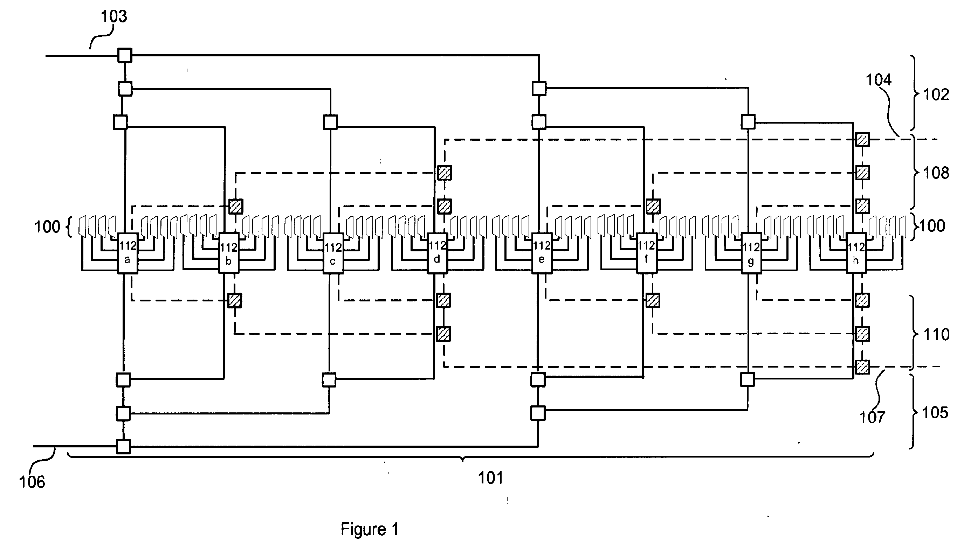

Figure 1 shows a schematic diagram of an optical sensor system in which each sensor may receive an interrogation signal via more than one route from a light source and returns its output signal via more than one route to a receiver. The sensor system provides a plurality of sensors 100 located along the length of a sensing region 101. A main input 103 is connected to each of the sensors 100 via a main input tree of wavelength multiplexers 102 (solid lines and empty boxes). Each of the sensors 100 is connected to a main output 106 via a main output tree of wavelength multiplexers 105 (solid lines and empty boxes). An auxiliary input 104 is also connected to each of the sensors 100 via an auxiliary input tree of wavelength multiplexers 108 (dashed lines and hatched boxes). Each of the sensors 100 is also connected to an auxiliary output 107 via an auxiliary output tree of wavelength multiplexers 110 (dashed lines and hatched boxes). The tree structure of multiplexers provides a reduction in optical loss compared to a serial connection system.

The main and auxiliary multiplexer trees have the same structure, but one starts at the left end and one starts at the right end. The overall structure is therefore a pair of interleaved trees, which provide resiliency. The terms 'main' and 'auxiliary' are used for convenience and are not intended to convey any difference in functionality between the described components.

In normal operation the main input 103 and main output 106 are connected to an interrogation system via optical fibres. The interrogation system comprises a light source for outputting light to the sensors and a receiver for receiving light returned from the sensors. Sensor region 101 may be located significant distances from the interrogation system, for example a number of kilometres. The sensing region may also extend over a significant distance, for example a small number of kilometres. The various distances will be defined by the application in which the sensing system is to be utilised. In a particular example a multi-fibre cable is utilised with the multiplexers and sensors being connected along the length of the cable and connected to the relevant optical fibres of the cable to form the structure shown in Figure 1.

The operation of the optical sensors 100 is not of importance to the current disclosure and the sensors may be any conventional optical sensing device. As will be explained in detail below, each sensor may be interrogated at two wavelengths and therefore the sensors must be of a type that can be interrogated at multiple wavelengths. In an example, sensors which modulate the phase of light in response to acceleration or pressure may be utilised to monitor seismic activity on the sea floor. Each sensor receives an optical signal from the interrogator and returns a return signal to the interrogator. Reflective or transmissive sensors may be utilised with appropriate connection of the inputs and outputs. The sensors are wavelength multiplexed by the input and output trees, and may be time multiplexed to increase the number of sensors that can be deployed.

Optical interface units 112a - 112h comprise an optical coupling arrangement to couple light from the input trees to each of the sensors connected to the particular unit, and to couple light returned from each of those sensors to the output trees. The structure and operation of the optical interface units will be described in detail below.

Each optical interface unit is connected to two groups of sensors; in Figure 1, four to the left of each optical interface unit and four to the right. Each of those groups is interrogated at a different wavelength and therefore the input signal to each optical interface unit from each input tree comprises two wavelengths. Those wavelengths are separated within the optical interface unit and coupled to the respective sensors. In alternative options, this split may be performed external to the optical interface unit. As will be appreciated, there are many possible multiplexer layouts that will achieve the same function as that shown in Figure 1.

Each sensor serviced by a particular wavelength is positioned a different optical distance from the optical interface unit and the return signals from those sensors are thus time-multiplexed, thereby allowing the signals from each sensor to be distinguished.

The connection topology of the system of Figure 1 enables each sensor to be interrogated via both the main and auxiliary input/outputs, providing a redundant connection system to allow continued operation in the event of a fibre break. For the system shown in Figure 1, depending on the location of a fibre break, a worst-case loss of four sensors occurs for a single break, and for many break locations operation can continue unaffected after a single break. This is a very significant improvement on prior art systems in which a single break could result in a loss of the entire sensing region.

The system shown in Figure 1 comprises eight optical interface units, each having eight sensor units attached. Each sensor unit may comprise a single sensor, or a number of sensors. For example, a sensor unit may comprise four time-multiplexed sensors. This is only an exemplary configuration and the connection topology can be extended to any arbitrary number of optical interface units and sensor units. The actual topology of a given system can therefore be selected to match requirements while retaining the performance of the connection topology described herein.

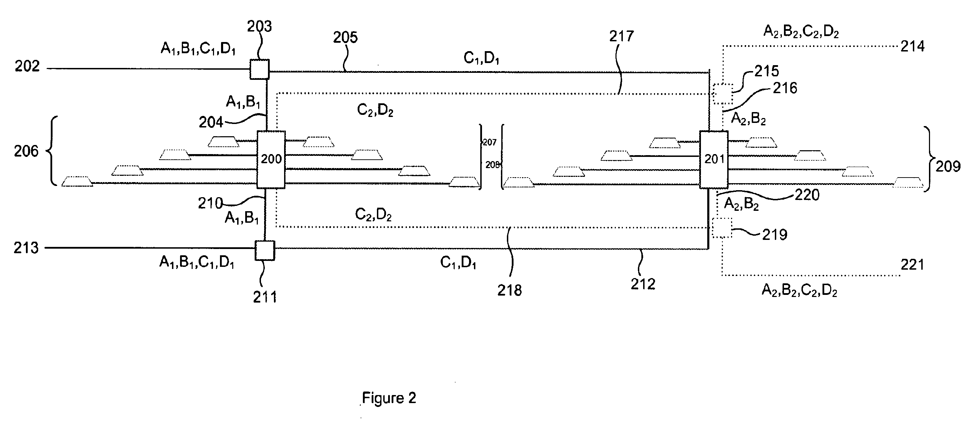

To more clearly explain the topology and configuration of the system, and the manner in which reliability enhancements are obtained, a small system is shown in Figure 2 having two optical interface units 200, 201, each connected to eight sensor units 206, 207, 208, 209. As in the system of Figure 1, each wavelength from each source is utilised for four sensor units, with those four sensor units being time multiplexed.

Figure 2 schematically illustrates the location of the various components along the length of the cable, which runs across the page. As can be seen the sensor units are located at intervals along the cable, with signals being directed to each sensor unit via connections running forwards and backwards along the cable. As explained previously this topology can be constructed using a multi-fibre cable with connections between fibres at appropriate locations.

A main optical input 202 carries four wavelengths, labelled as A₁, B₁, C₁, D₁. Wavelength multiplexer 203 splits these wavelengths into two pairs with A₁, B₁ being output on connection 204 and C₁, D₁ being output on connection 205. In optical interface unit 200, wavelength A₁ is connected to each of the sensor units 206 and wavelength B₁ is connected to each of the sensor units 207. In optical interface unit 201, wavelength C₁ is connected to each of the sensor units 208 and wavelength D₁ is connected to each of the sensor units 209. In alternative configurations, wavelengths A₁ & B₁, and C₁ & D₁, may be separated in an external wavelength multiplexer rather than within the optical interface unit, or multiplexer 203 may be located within the optical interface unit 200.

Signals at wavelengths A₁, B₁ returning from the sensor units 206 and 207 are combined and output on connection 210 to wavelength multiplexer 211. Similarly, signals at wavelengths C₁, D₁ returning from sensor units 208, 209 are combined and output on connection 212 to wavelength multiplexer 211. Wavelength multiplexer 211 combines the four wavelengths and outputs them to main optical output 213. The four wavelengths input to the main input 202 are thus separated to the four groups of sensor units and then combined back to the main output using a symmetrical pair of input and output wavelength multiplexer trees.

An auxiliary optical input 214 may carry the same four wavelengths as the first optical input, labelled as A₂, B₂, C₂, D₂. Wavelength multiplexer 215 splits these wavelengths into two pairs with A₂, B₂ being output on connection 216 and C₂, D₂ being output on connection 217. In optical interface unit 200, wavelength C₂ is connected to each of sensor units 207 and wavelength D₂ is connected to group of sensor units 206. In optical interface unit 201, wavelength A₂ is connected to each of sensor units 209 and wavelength B₂ is connected to group of sensor units 208.

Signals at wavelengths C₂, D₂ returning from the sensor units 206, 207 are combined and output on connection 218 to wavelength multiplexer 219. Similarly, signals at wavelengths A₂, B₂ returning from sensor units 208, 209 are combined and output on connection 220 to wavelength multiplexer 219. Wavelength multiplexer 219 combines the four wavelengths and outputs them to the auxiliary output 221. The four wavelengths input to the auxiliary input 214 are thus separated to four groups of sensor units and then combined back to the auxiliary output using a symmetrical pair of input and output wavelength multiplexers arranged in a tree.

Each group of sensor units may thus be interrogated by two different wavelengths, a main wavelength arriving from the main input 202 and being output to the main output 213, and an auxiliary wavelength arriving from the auxiliary input 214 and being output to the auxiliary output 221.

It will be appreciated that the system of Figure 1 is an extension of this basic structure to provide greater number of levels of splitting. In the example of Figure 1 there are sixteen groups of sensor units, and hence sixteen wavelengths are input to the main and/or auxiliary inputs. These sixteen wavelengths are equally split in each multiplexer such that two wavelengths enter each optical interface unit as with Figure 2.

The structure of Figures 1 and 2 may be utilised to provide redundant connections to the optical sensor units. The main input 202 and output 213 may be connected to the interrogator via a main optical cable, and the auxiliary input 214 and output 221 may be connected to the interrogator via an auxiliary optical cable. Various connection arrangements are possible to utilise connections most efficiently as will be described in more detail below.

In normal use only the main input and output of a system are utilised and sensing is performed as with any conventional system. However, should a failure occur, for example a fibre break, the auxiliary input and output may be utilised to continue operation of the system.

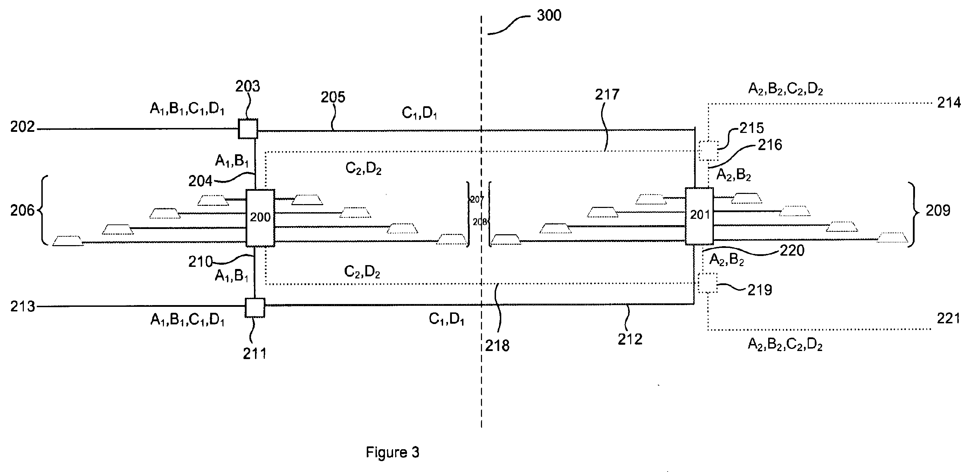

Figure 3 shows a schematic diagram of a cable break 300 in the system of Figure 2. Connections 205 and 212 have been cut, preventing access to optical interface unit 201 from the main input and output 202, 213. However, optical interface unit 201 is accessible via the auxiliary input and output 214, 221. Optical interface unit 200 cannot be accessed via the auxiliary input and output 214, 221 as the connections 217, 218 have also been cut, but access to that optical interface unit is maintained via the main input and output 202, 213. Operation of sensor units 206, 207 is therefore not affected by the cable cut, and operation of sensor units 208, 209 can be recommenced by connection of an interrogator to the auxiliary input and output 214, 221. As will be explained in detail below, a variety of options may be utilised to provide this reconfiguration in an efficient manner. Following reconfiguration all of the sensor units are operational and there has been no degradation in the system performance due to the cable break.

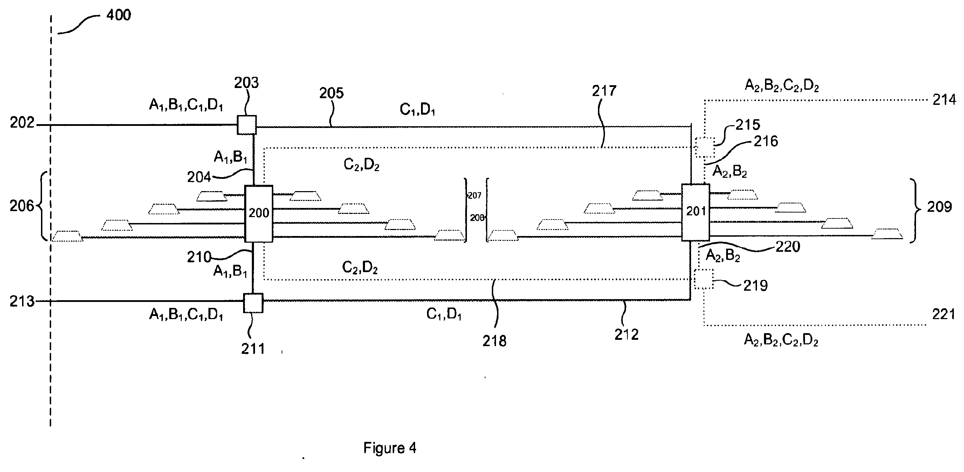

Figure 4 shows a cable break 400 in a different location, with the break occurring across the main input and outputs 202, 213. In this scenario access to all of the sensor units via the main input and output is lost, but access to all sensor units is retained via the auxiliary input and output 214, 221. Full service is therefore retained by reconnecting the interrogator to the auxiliary input and output 214, 221.

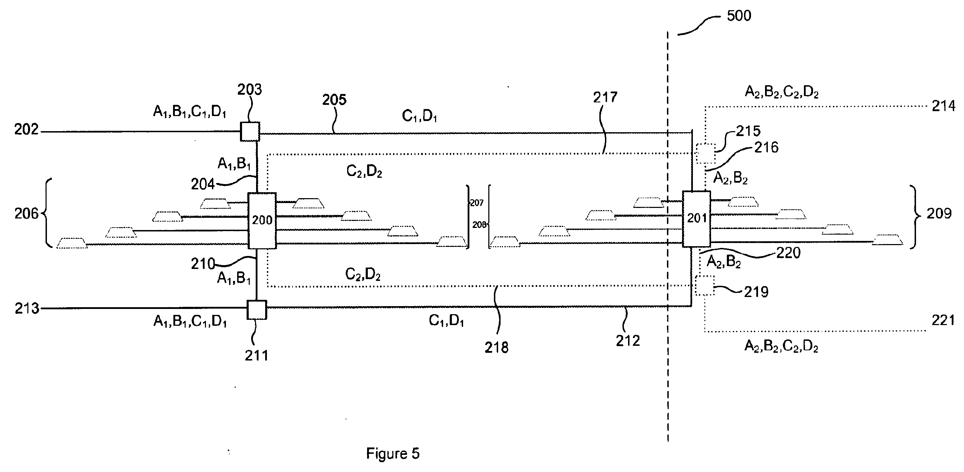

Figure 5 shows a fibre-break in a worst-case location. In this scenario the break is through the fibres connecting the sensor units 208 to the optical interface unit 201. There is no redundant path between sensor units and optical interface units and therefore the sensor units 208 cannot be revived by a reconfiguration of the interrogation system. However, by making the changes described in relation to the scenario of Figure 3 access to the sensor units 209 can be restored. This scenario represents the worst-case location for a fibre break, and only four sensor units are lost, although greater numbers of sensors may be lost if a failure of one of the optical interface units occurs.

When reconfiguring interrogation systems after a cable break recalibration of the system may be required as sensor units may be interrogated by different sources and receivers. This recalibration is performed in the conventional manner.

To ensure a system is able to benefit from the resiliency provided by the topologies described above, the connections to the main input and output, and the auxiliary input and output, should be via separate routes such that a single break anywhere in the system cannot break both connections. The most resilient system would therefore utilise two cables, one from each end of the sensor region, to connect to the interrogation equipment. However, such a system may be uneconomic or impractical due to the cost of the connection cable and practical difficulties in making the connection. For example, in sea-based systems the sensor region may be on the sea bed with the source and receivers located on a platform. Providing two independent cables from the platform to the sensor region would be difficult and expensive and may not be justified by the risk of failure. Other layouts with slightly reduced resiliency may therefore be preferable.

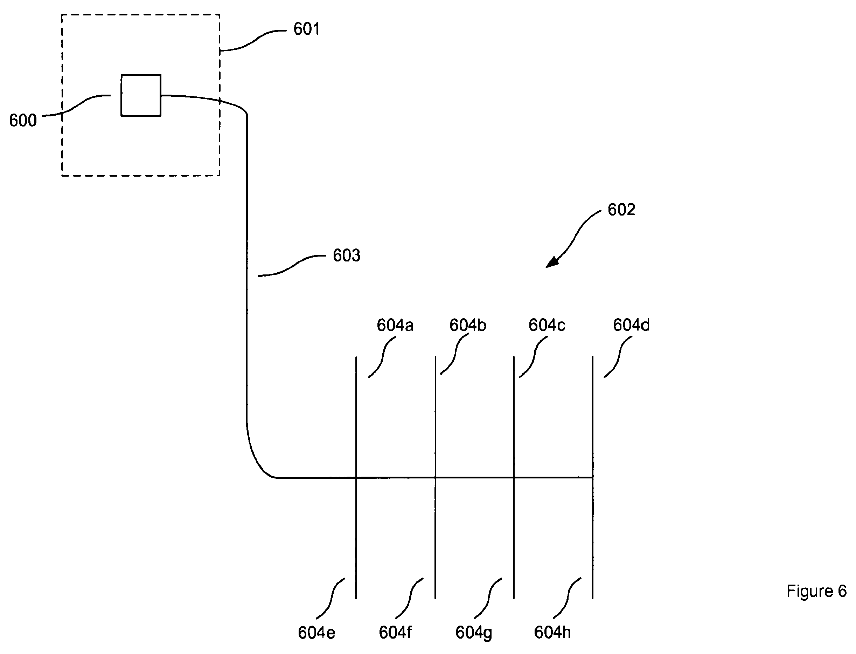

Figure 6 shows a schematic diagram of a conventional sensing system deployed for sea-bed monitoring. The interrogator system 600 is located on a platform 601 (or any surface vessel or on-shore) and is connected to a sensor array 602 on the sea bed by a connection cable 603. The sensor array 602 comprises a plurality of sensing arms 604a-h each comprising a sensor region as described above with reference to Figures 1 and 2. The number of, and connections to and from, the sensor units are selected dependent upon the requirements of the system, but in an example each 'arm' of the sensor comprises one sensor region as shown in Figure 1. In the layout of Figure 6 each sensor region is connected to the interrogator by a single path and therefore as discussed above there is a single point of failure.

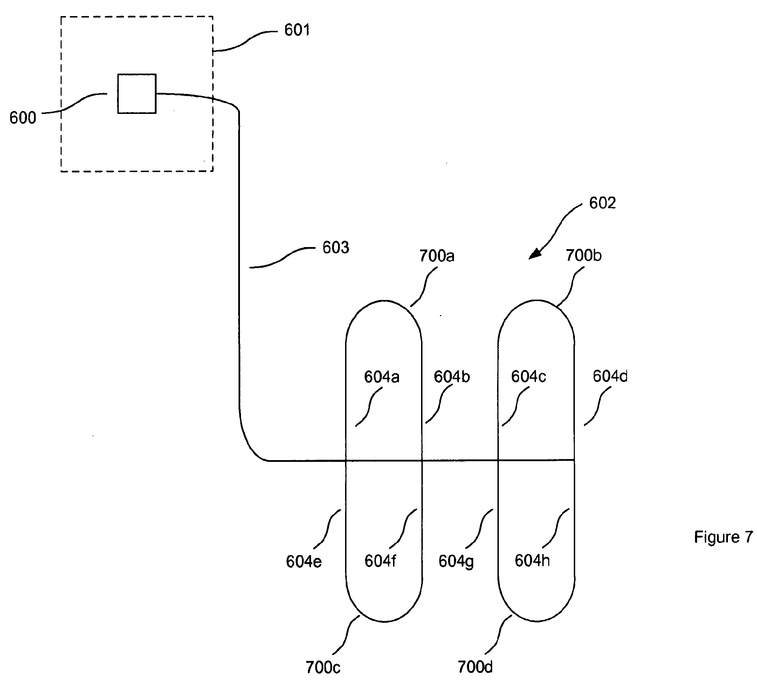

Figure 7 shows a modification of the Figure 6 arrangement in which resiliency is increased by connections 700a - d. Each arm comprises a sensor region as shown in Figure 1 with a main input and output and an auxiliary input and output. The main input and output of each sensor region are connected to the interrogator directly via the connection cable 603. The auxiliary input and output of each region is connected via a respective one of connections 700a - d to an adjacent arm, and via that arm and connection cable 603 to the interrogator. This connection arrangement provides an alternative connection path to each sensor region, thereby enabling the system to benefit from the resiliency of the topologies described above when a break occurs along the length of one of the arms.

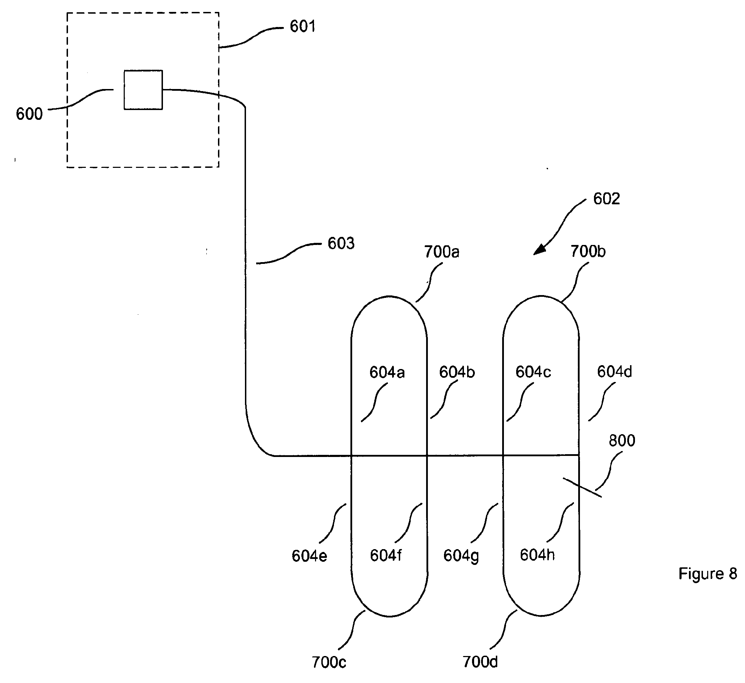

Figure 8 shows the system of Figure 7 with an exemplary fibre cut 800 across one of the arms 604h. Sensor units to the inboard side of the break can still be accessed via the main input and output, and the sensor units to the outboard side of the break may be accessed via the auxiliary input and output through the connection 700d to the adjacent arm 604g. Any single break in a connected pair of arms leads to the resiliency described above, with a maximum loss of one group of sensor units. The connection cable 603 still represents a single point of failure, but this represents a reduced region of the overall system in which a single failure causes significant loss of sensing capability.

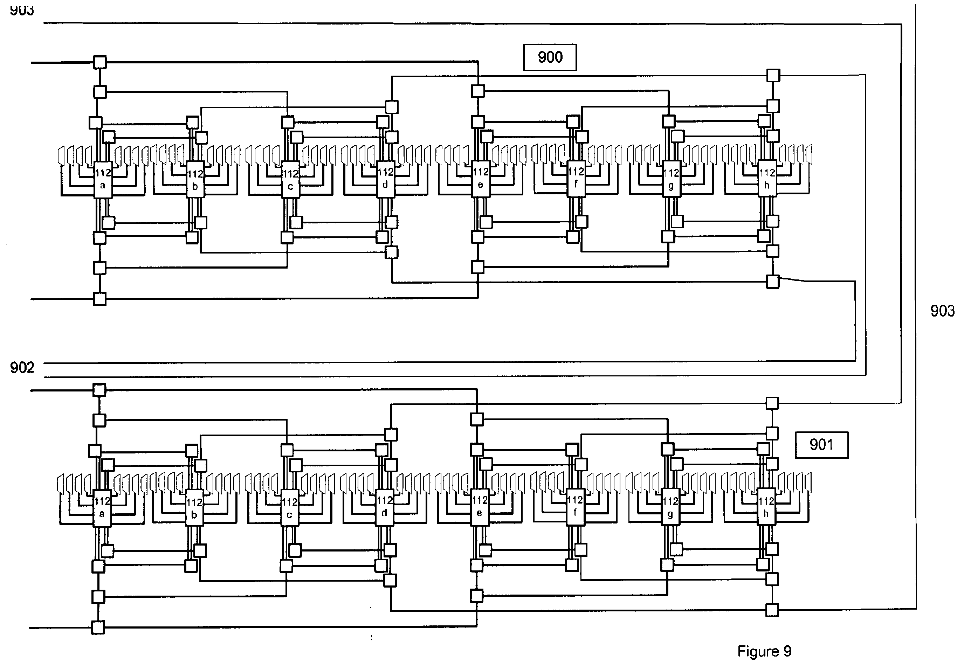

Figure 9 shows a pair of the sensor regions 900, 901 of Figure 1, with connections to form a pair of the arms of Figure 7. Each cable has a pair of additional fibres, 902, 903 which are connected back to the interrogator. The fibres 902, 903 run the length of the corresponding sensor region 900, 901 and through connection 903, which represents one of the connections 700a - c of Figure 7, to the adjacent sensor region, where they are connected to the auxiliary input and output of that sensor region. The main input and output of sensor region 900 are therefore connected to the interrogator via a first route through the main cable, and the auxiliary input and output of the sensor region 900 are connected to the interrogator via a second route, through the sensor region 901, the connection 903, and the main cable. The system is therefore tolerant to single breaks in the sensor region as described above.

As will be apparent to the reader there a wide range of options for providing connections between an interrogator and the main and auxiliary ends of a sensor region to provide the resiliency described above.

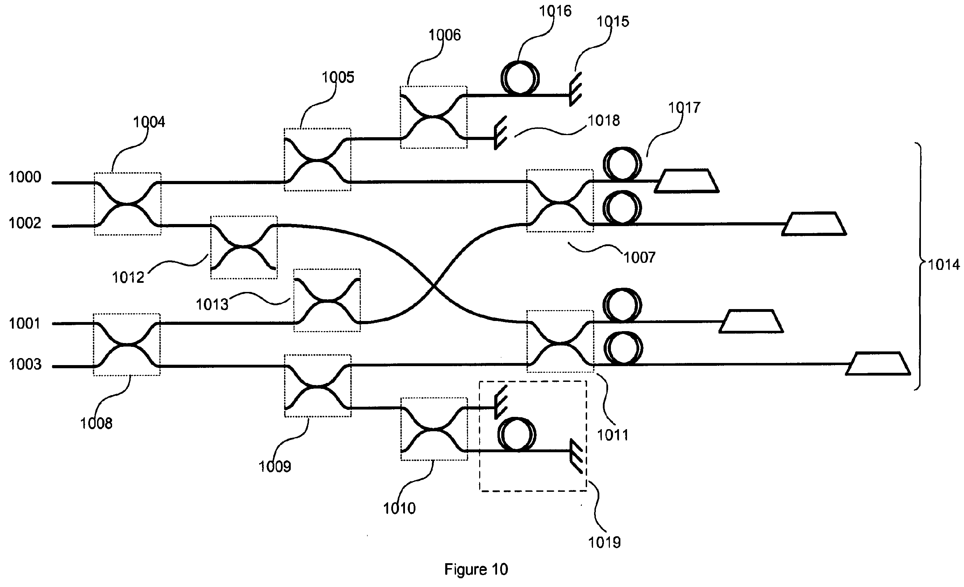

The optical interface units noted previously comprise a set of optical couplers to connect each of the input trees to the sensor units, and the output from the sensor units to each of the output trees. Figure 10 shows a coupler arrangement to couple light from the main and auxiliary inputs to the sensor units, and returned light from the sensor units to the main and auxiliary outputs. This coupler arrangement represents half of one of the optical interface units of Figures 1 and 2 - i.e. it connects one of the two sets of four couplers. The coupler arrangement therefore only receives one of the two wavelengths entering the optical interface unit, with the other wavelength being connected to an equivalent arrangement for the second group of couplers. As noted in relation to Figure 2, the separation of the wavelengths to single wavelengths may be performed internally as noted here or externally from the optical interface unit. Figure 10 will be described using the nomenclature of Figure 2 as if the arrangement is in an optical interface unit 201 to connect sensor units 206.

A first input 1000 receives the sensing wavelength, A₁, from the main input tree, and a second input 1001 receives the sensing wavelength D₁, from the auxiliary input tree. First output 1002 outputs signals from the sensor units to the main output tree and second output 1003 outputs signals from the sensor units to the auxiliary output tree. Each of the couplers 1004 - 1013 is a non-wavelength selective optical power coupler. The tree connection structure connects both inputs to all four sensor units 1014. Delay coils 1017 may be provided to ensure correct time multiplexing of the four sensor units.

Particular sensor types are wavelength sensitive such that variation in the wavelength of the probe signals causes a variation in the output signal and hence an error in the measurement. Coupler 1006, mirrors 1015, 1018 and coil 1016 provide a reference to enable cancellation of wavelength variation, thereby improving the accuracy of the sensors.

Mirror 1015 is located further from coupler 1006 than mirror 1018 due to coil 1016, which is configured to be inert to physical effects. Physical changes, for example vibration or acceleration, sensed by the sensors therefore do not have any (or minimal) effect on the light passing through coil 1016. As well as being directed to the sensors, light pulses also exit coupler 1006, propagate to, and are reflected from, mirrors 1015 and 1018, and return to coupler 1006 where returning light from each mirror 1015 and 1018 is combined and returns to the output 1002. The coupler 1006, mirrors 1015, 1018 and coil 1016 form a reflective interferometer, with the output being dependent on the optical path length difference between the paths via each mirror. Variation in that output can therefore be utilised to determine changes in the optical path length difference, which is dependent on both the physical properties of the paths, and the optical wavelength. Since the coil (and other aspects of the paths) are designed to change minimally due to physical effects, changes can be attributed to changes in wavelength of the light. This can be monitored and utilised to adjust measurements from the sensors to compensate for wavelength variations in the light sources.

Since only short pulses are typically utilised to interrogate the sensors (to allow time multiplexing), it may be necessary to provide a means to delay and overlap the pulses to achieve interference. Alternatively multiple pulses can be launched at differing times such that the differential delay causes them to overlap at the output of coupler 1006.

In the arrangement of Figure 10, only light from the first input 1000 is coupled to coupler 1006, and hence to the reference system, and therefore a second reference unit 1019, configured in the same manner as the first described above, is provided for use with the second input 1001.

Couplers 1012 and 1013 are utilised as optical attenuators to balance the powers received at each sensor unit. Optical attenuators could be used instead, or they could be omitted and an unequal power distribution utilised.

Light of different wavelengths (A₁ and D₁, in this example) is modified by each sensor unit, and returned to both outputs as the components are not wavelength selective. Each of the first and second outputs therefore carry two different wavelengths, but the unrequired wavelength (D₁ on the first output and A₁ on the second output) is eliminated in the first wavelength multiplexer of the output tree and therefore does not affect operation. The wavelengths arriving at each sensor unit group from the main and auxiliary input trees may therefore be selected to ensure that the unwanted return wavelength is effectively rejected by the output tree, for example by selecting wavelengths that are well apart from one another.

As noted previously each of the sensor units is located a different optical distance from the optical interface unit and the return signals are thus time multiplexed enabling each sensor unit to be distinguished. The operation of the sensors and their interrogation is as in prior systems, except in the current system each sensor unit can be interrogated at two wavelengths, via two connection routes.

In an example arrangement, couplers 1004, 1006, 1007, 1008, 1010 and 1011 are 50:50 couplers that split the input power evenly, and couplers 1005, 1012, 1013, and 1009, are 87:13 couplers with the output ports connected to the sensor units being the higher proportion output.

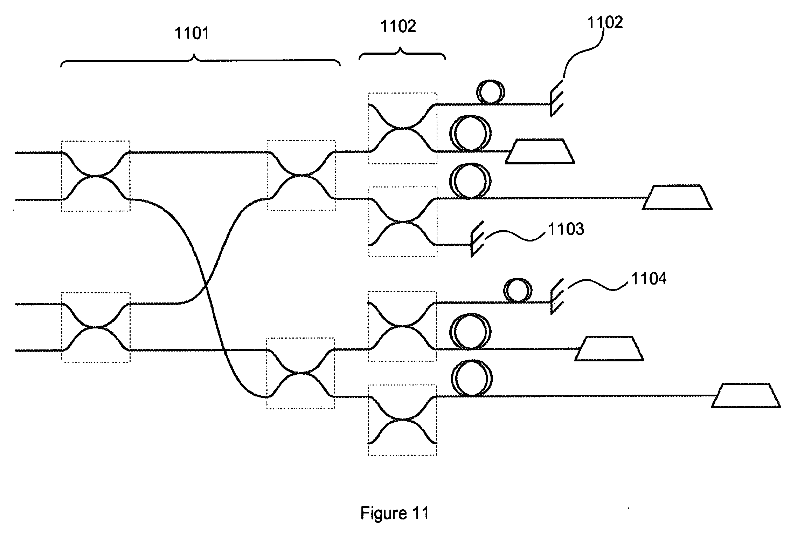

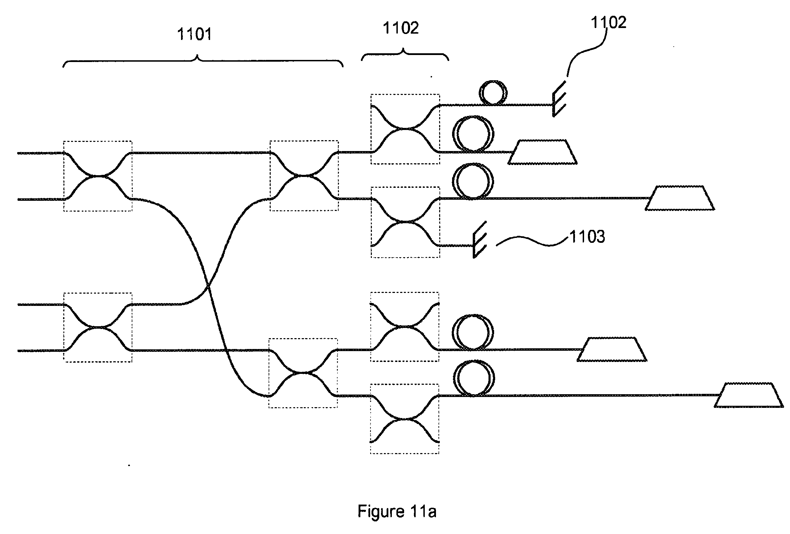

Figure 11 shows an alternative coupler structure to that of Figure 10 utilising a reduced number of couplers. In an example arrangement, couplers 1100 are 50:50 couplers, and couplers 1101 are 87:13 couplers. In this arrangement, a first reference unit is formed from mirrors 1102 and 1103, and a second reference unit is formed from mirrors 1103 or 1102, and 1104. The principle of operation of these units is the same as described in relation to Figure 10, except the physical layout is different with the two reference paths being accessed via different couplers. Figure 11a shows a further alternative coupler structure utilising a single reference unit for both inputs. In the arrangement of Figure 11 both reference units are accessed from both inputs, and therefore one of them can be removed, retaining one reference unit for use from both inputs. A comparable arrangement could be achieved by removing the sensor and mirror 1102 from the arrangement of Figure 11 and retaining the sensor and mirror 1104.

In the foregoing description the system of Figure 1 has been utilised to provide resiliency due to fibre breaks. However, the system can also be utilised to enable each sensor unit to be interrogated simultaneously (one via the main input and output, the other via the auxiliary input and output) at two different wavelengths which may be utilised to improve the accuracy or other factor of the sensor units. UK patent application No. 0919017.4 filed by the present applicants discusses the use of multiple wavelengths to interrogate sensor units.

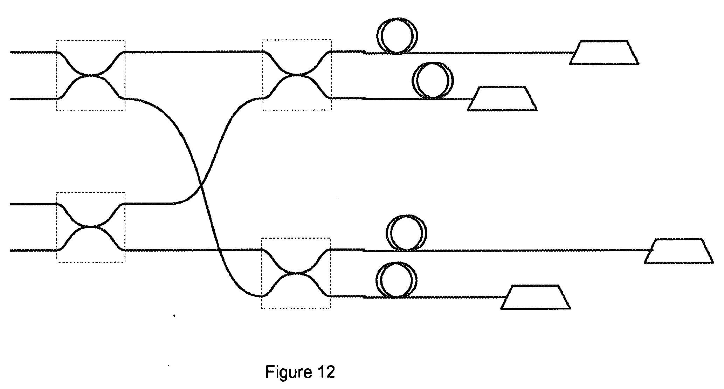

In certain systems it may be possible to operate the system without the reference sensor units. In such a system the coupling arrangement can be simplified to that shown in Figure 12, in which all couplers are 50:50 couplers. As discussed above, each sensor may be interrogated by two wavelengths which can be utilised to compensate for wavelength variation without a reference. Each sensor can only have one physical length at a time, which applies for both wavelengths interrogating the sensor. This known limitation can be utilised with measurements from two wavelengths to cancel acoustic noise in the sensors.

As will be appreciated 2 x 2 couplers have been utilised in Figures 10 - 12 as an example only and other couplers may be utilised while providing the same functionality. For example, the couplers of Figure 12 may be replaced by a single 4 x 4 coupler.

To benefit from the improved resiliency of the systems described above means must be provided to couple an interrogation system to the auxiliary input and output in the event of a failure. As has been described above, depending on the location of a break, subsequent interrogation may be performed only via the auxiliary input and output, or via a mixture of the main and auxiliary inputs and outputs. There is therefore a requirement for flexible reconfiguration of interrogators to provide these various options.

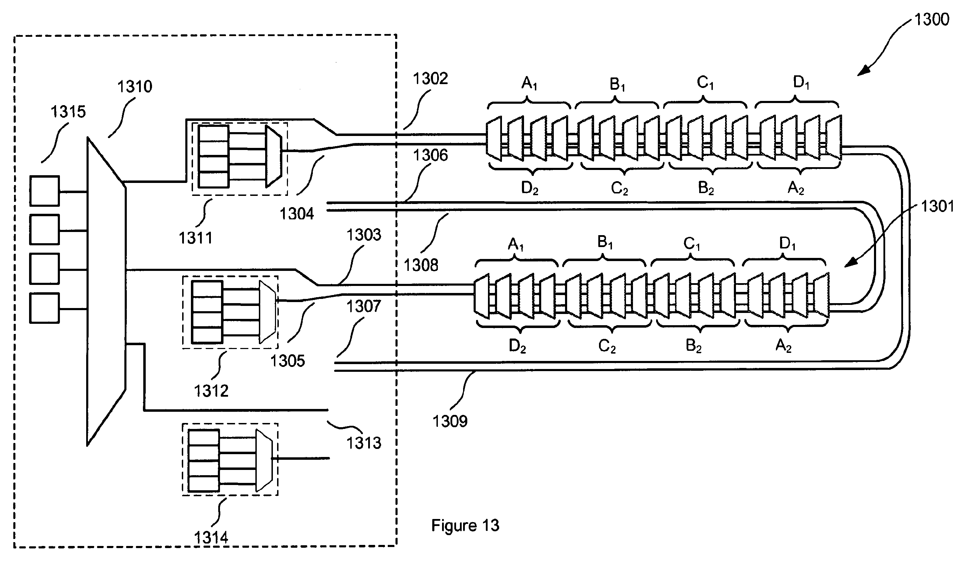

Figure 13 shows a schematic overview of an interrogator system connected to first and second sensor regions 1300, 1301 which are configured according to the principles described in relation to Figure 9. Each sensor region is equivalent to that shown in Figure 2 with 16 sensor units in four groups of four, with each group of four interrogated at a different wavelength. Each sensor unit group is potentially interrogated by two different wavelengths; one of A₁, B₁, C₁, D₁, via the main inputs 1302, 1303 and outputs 1304, 1305 to each sensor region and a different one of A₂, B₂, C₂, D₂ via the auxiliary inputs 1306, 1307 and outputs 1308, 1309 to each sensor region.

A multi-wavelength light source 1315 producing light at wavelengths A, B, C, D is utilised which may be provided by a plurality of fibre lasers, or other suitable source devices. The individual wavelengths are combined and modulated in transmit unit 1310 as required for the particular system. An output of the transmit unit is connected to each of the main inputs 1302, 1303 of the first and second sensor regions 1300, 1301. Receiver units 1311, 1312 each comprise a demultiplexer to separate the four wavelengths, and four receivers. The demultiplexer may also provide additional components and functionality to provide pre-receiver processing of the optical signals.

An additional, spare, output 1313 is provided which is equivalent to the outputs used for the first and second sensing regions 1300, 1301, and a spare receiver unit 1314 is also provided.

In the event that a break occurs in one of the sensing regions 1300, 1301 the spare source output 1313 and receiver 1314 are patched to the respective auxiliary input and output to allow interrogation of the sensor region to continue. The patching may be performed by manually reconnecting fibres, or an optical switch system may be provided to perform the reconnection. An automated system may be provided to automatically detect a failure and make the necessary reconnections. If the break is along the length of the sensing region, interrogation proceeds using both the main and auxiliary ends of the sensing region, but if the break is at the main input end of the sensing region, interrogation proceeds only via the auxiliary end. In the latter case the main transmitter and receiver can be removed from the main input and output and connected to the auxiliary input and output without using the spare transmitter and receiver.

Further spare transmitter outputs and receivers may be provided to enable operation to continue in the event of a break in both sensor regions.

The sensor topology described hereinbefore may also be utilised to increase resiliency due to failure of transmitters at the interrogator. In conventional systems in which each sensor unit is interrogated by a single wavelength, in order to avoid loss of sensing capacity due to failure of a laser used as a light source, a replacement for each type of laser must be available. Since the source lasers utilised are generally not tunable, and different wavelengths are utilised for each group of sensor units, a number of spare lasers is required. Lasers are a significant part of the interrogator hardware cost and therefore maintaining a full spare set is undesirable.

As was explained above with reference to Figure 13, each sensor unit group is interrogated by one wavelength via the main input and output, and a second wavelength when interrogated via the auxiliary input and output. In the above description this has been utilised to enable continued sensing due to a cable break, but as now described it can also enable reduced sparing of lasers and transmitters.

In the event of a laser failure in the system of Figure 13, the spare output 1313 and receiver 1314 may be utilised to interrogate sensor units via one of the auxiliary second inputs. For example, if the 'A' wavelength laser fails, the 'A' sensor units will no longer be interrogated. However, when interrogated via the auxiliary input and output, those sensor units utilise wavelength 'D'. That source is still operating and so the spare output 1313 and receiver 1314 can successfully maintain a full set of sensors. One spare output and input are required for each sensing region to be maintained after a failure, and so in the above example, only one sensing region retains complete functionality.

The system can tolerate a failure of up to half of the sources without losing any sensor units in a region for which a spare transmitter and receiver are available. For example, if the A and B sources fail all of the sensor units can continue to be probed used wavelengths C and D via the auxiliary inputs and outputs. However, if the A & D wavelengths fail, which are paired, access to two groups of sensor units in each region will be lost. The loss of sensors is dependent on the pairing of wavelengths. For example, a pairing of A-D, B-A, C-B, and D-C results in a maximum loss of one group of sensors if two lasers fail, but the probability of losing one group is increased compared to the pairing shown in Figure 13.

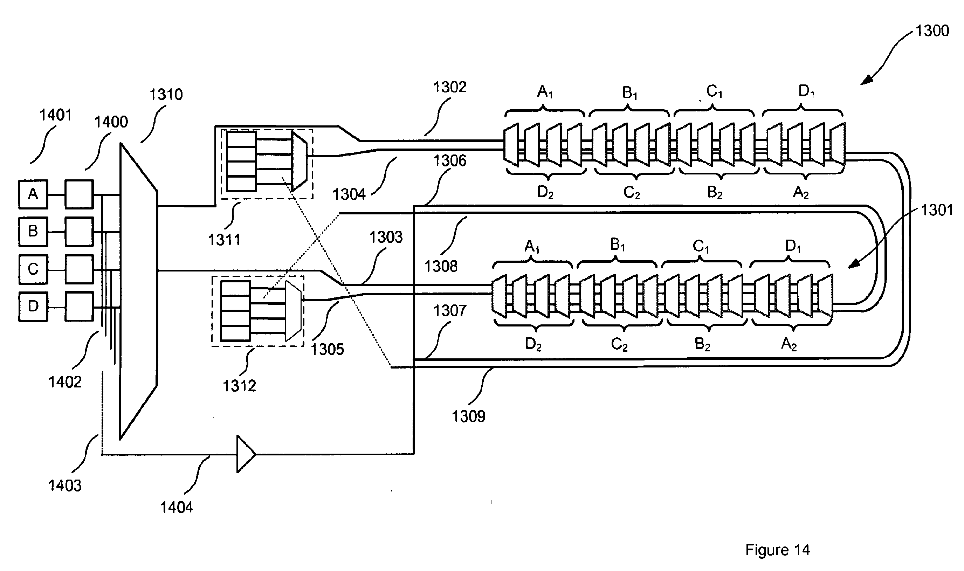

Figure 14 shows an interrogation configuration system for use with the sensor regions described previously to reduce the component sparing required to maintain operation in the event of a laser failure.

The modulators 1400 for each laser source 1401 are provided external to the multiplexing system 1310 and tap points 1402, forming a spare output, are provided at each modulator output. A tap input 1403 is provided which may be connected to any of the tap points 1402. The tap input 1403 is connected via an optical amplifier to auxiliary inputs 1306, 1307 via an optical amplifier 1404. The auxiliary outputs 1308, 1309 are provided with a patch system to enable them to be patched to any of the receivers in the respective receiver unit.

In the event of a laser failure the tap input 1403 is connected to the laser which is paired with the failed laser, and the auxiliary outputs are connected to the receivers corresponding to the failed laser, thereby enabling operation to continue. If, for example, laser A fails, the tap input 1403 is connected to the output for laser D, since in the sensor units those two wavelengths are paired. Each auxiliary output is then connected to the receiver that was utilised by laser A (the wavelength selectivity of each receiver is provided by the demultiplexer and therefore the wavelength received by a receiver can be changed by patching the auxiliary output in to the receiver after the demultiplexer). Subject to recalibration, operation of the system can then continue utilising all of the sensor units. Failure of a single laser (or modulator) can thus be tolerated without any loss of sensor units, and without requiring a spare laser. The additional complexity and cost is minimal.

As will be apparent, various configurations utilising the principles of Figures 13 and 14 may be utilised to provide resiliency in the event of laser failure. For example, as opposed to the tap outputs of Figure 14, the optical amplifier may be connected to a spare output from the multiplexer and an optical filter utilised to select the required wavelength. Also, to avoid the requirement to reconnect receivers in the event of a laser failure, a spare set of receivers may be provided, although this incurs a cost penalty. However, these receivers may also be utilised to provide resilience in the event of a cable cut. As will be appreciated various levels and combinations of spare devices may be utilised to provide the required trade-offs between resiliency, cost and convenience of reconfiguration following a failure.

As noted above, the demultiplexer component in the receiver may contain additional functionality in addition to wavelength separation. For example, in certain receiver designs delay coils are utilised to overlap returning pulses. However, in the system of Figure 14 the demultiplexer is bypassed by the wavelength using the auxiliary fibre. Spare components may therefore be required to enable the additional functionality to be provided, or a reduced performance may be accepted in the event of a failure. If full receiver functionality is required a complete spare receiver system may be required for each sensor region, but no spare transmitter lasers are required and therefore the overall cost may still be reduced compared to other techniques, for example as shown in Figure 13.

The failures discussed above may not be total failures, but also partial failures leading to, for example, a loss of output power or wavelength control. A failure is intended to include any degradation in a source leading to a loss of sensing ability.

Where in any of the foregoing description a fibre, connection or component is described in the active sense as carrying or guiding a particular wavelength, it will be understood that this is for clarity only and that the language is intended to specify the relevant part may carry those wavelengths, or is configured to do so. Clearly, the wavelengths will only be present when a light source is feeding the wavelength to the system, and the presence or absence of such a source does not affect the physical structure of the system that is described herein.

In the foregoing description the word 'tree' has been utilised to describe the system of wavelength multiplexers to route signals to and from the sensors. As will be appreciated by the reader, the invention is not limited to the specific structures shown in the exemplary embodiments. The number of levels of branching may be varied according to the number of sensors, and to split wavelengths in different patterns. For example, each level of splitting in the examples separates the wavelengths into two halves, but each level could also separate them into three equal, or unequal, portions. Furthermore, the tree could comprise a single level of separation, with only a single device separating each wavelength onto an individual fibre which is connected to an optical interface unit. Each of these examples is still a tree as contemplated in the present description, but the term does not include arrangements in which sensors are serially connected and wavelengths must go via other sensor units to reach the particular sensor unit they are probing; such arrangements would not achieve the advantage of reduced optical loss which is provided by the tree structure.

In certain embodiments only one of the input and output trees may be wavelength selective, or neither may be wavelength selective. Where non-wavelength selective trees are used the system must be designed such that there is acceptably low cross-talk between sensors since each wavelength may also pass through sensors. This cross-talk may be mitigated by one of the input or output trees being wavelength selective, or by the use of wavelength-selective filters at appropriate locations in the system. Optical isolators may also assist in reducing cross-talk due to reflections.

In the case of the input tree being non-wavelength selective, all wavelengths may be directed to all sensors, and the output tree is utilised to select the required wavelength from each sensor.

Similarly, the description is not intended to be restricted to any particular form of wavelength multiplexing device, and any device which achieves the function of directing the required wavelengths to the sensors may be utilised. It is also possible that the branching points in the tree will be provided by power couplers, and a filtering system is then provided before, after, or before and after each optical interface unit or sensor to select only the required wavelength(s).

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods as long as they remain within the scope of the subject matter as defined in the claims. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention, as defined in the claims.

## Claims

1. An optical sensing system, comprising
a plurality of optical sensors (100),
a first input tree (102), each sensor (100) being optically connected to a first optical input (103) via the first input tree (102), wherein the first input tree (102) is configured to direct signals from the first input (103) to sensors (100),
a first output tree (105), each sensor (100) being optically connected to a first optical output (106) via the first output tree (105), the first output tree (105) being configured to direct signals from each sensor (100) to the first optical output (106), **characterised by**
a second input tree (108), each sensor (100) being optically connected to a second optical input (104) via the second input tree (108), wherein the second input tree (108) is configured to direct signals from the second input (104) to sensors (100),
and
a second output tree (110), each sensor (100) being optically connected to a second optical output (107) via the second output tree (110), the second output tree (110) being configured to direct signals from each sensor (100) to the second optical output (107), wherein
the first input tree (102) is configured to direct signals of particular wavelengths from the first input (103) to particular sensors and/or the first output tree (105) is configured to direct signals of particular wavelengths from particular sensors to the first output (106), and
the second input tree (108) is configured to direct signals of particular wavelengths from the second input (104) to particular sensors and/or the second output tree (108) is configured to direct signals of particular wavelengths from particular sensors to the second output (104).

2. An optical sensing system according to claim 1 wherein the wavelength directed to each sensor (100) by the first input tree (102) is different to the wavelength directed to the same sensor (100) by the second input tree (108).

3. An optical sensing system according to any preceding claim, wherein the first output tree (105) is configured to direct the particular wavelengths directed to each sensor (100) by the first input tree (102) from each sensor to the first output (106).

4. An optical sensing system according to any preceding claim, wherein the second output tree (110) is configured to direct the particular wavelengths directed to each sensor (100) by the second input tree (108) from each sensor (100) to the second output (107).

5. An optical sensing system according to any preceding claim, wherein the first input tree (102) and first output tree (105) have the same optical structure but are traversed in opposite directions by signals in the system.

6. An optical sensing system according to any preceding claim, wherein the second input tree (108) and second output tree (110) have the same optical structure but are traversed in opposite directions by signals in the system.

7. An optical sensing system according to any preceding claim, wherein the signal wavelengths directed to each sensor (100) by the first and second input trees (102, 108) are selected from the same set of wavelengths, with each of the set of wavelengths being directed to at least one sensor (100) by the first input tree (102) and at least one sensor (100) by the second input tree (108).

8. An optical sensing system according to any preceding claim further comprising an optical source connected to the first input, the optical source configured to provide an optical signal at each of the wavelengths directed to sensors by the first input tree (102).

9. An optical sensing system according to any preceding claim where in the at least one of the input and output trees comprises a hierarchy of wavelength selective couplers.

10. An optical sensing system according to any preceding claim, further comprising at least one reference unit, wherein a first wavelength is directed to that reference unit by the first input tree and a second, different, wavelength is directed to that reference unit by the second input tree.

11. A method of reconfiguring an optical sensing system according to any of claims 1 to 10 and an optical source outputting a plurality of wavelengths coupled to the first input, the method comprising the steps of
determining a failure of one of the wavelengths of the optical source, and
directing a wavelength via the second input to interrogate sensors previously interrogated by the failed wavelength via the first input.

12. A method of reconfiguring an optical sensing system according to any of claims 1 to 10 and an optical source outputting a plurality of wavelengths coupled to the first input, comprising the steps of
determining a failure in the sensing system, and
directing a wavelength via the second input to interrogate sensors no longer accessible via the first input.

13. A method according to claim 11 or 12 wherein the wavelength directed via the second input is different to the wavelength previously interrogating the sensors via the first input.

14. A method of operating an optical sensing system according to any of claims 1 to 10, the method comprising the steps of
inputting at least a first signal to the first input and a second signal to the second input, wherein the first and second wavelengths are different and are selected such that they are directed to the same sensor by the first and second input trees, and
detecting the first signal output from the first output and the second signal output from the second output.

## Patentansprüche

1. Optisches Erfassungssystem, umfassend
eine Vielzahl von optischen Sensoren (100),
eine erste Eingangsstruktur (102), wobei jeder Sensor (100) über die erste Eingangsstruktur (102) optisch mit einem ersten optischen Eingang (103) verbunden ist, wobei die erste Eingangsstruktur (102) konfiguriert ist, um Signale von dem ersten Eingang (103) zu den Sensoren (100) zu leiten,
eine erste Ausgangsstruktur (105), wobei jeder Sensor (100) über die erste Ausgangsstruktur (105) optisch mit einem ersten optischen Ausgang (106) verbunden ist, wobei die erste Ausgangsstruktur (105) konfiguriert ist, um Signale von jedem Sensor (100) zu dem ersten optischen Ausgang (106) zu leiten, **gekennzeichnet durch**
eine zweite Eingangsstruktur (108), wobei jeder Sensor (100) über die zweite Eingangsstruktur (108) optisch mit einem zweiten optischen Eingang (104) verbunden ist, wobei die zweite Eingangsstruktur (108) konfiguriert ist, um Signale von dem zweiten Eingang (104) zu den Sensoren (100) zu leiten,
und
eine zweite Ausgangsstruktur (110), wobei jeder Sensor (100) über die zweiten Ausgangsstruktur (110) optisch mit einem zweiten optischen Ausgang (107) verbunden ist, wobei die zweite Ausgangsstruktur (110) konfiguriert ist, um Signale von jedem Sensor (100) zu dem zweiten optischen Ausgang (107) zu leiten, wobei
die erste Eingangsstruktur (102) konfiguriert ist, um Signale bestimmter Wellenlängen von dem ersten Eingang (103) zu bestimmten Sensoren zu leiten und / oder die erste Ausgangsstruktur (105) konfiguriert ist, um Signale bestimmter Wellenlängen von bestimmten Sensoren zu dem ersten Ausgang (106) zu leiten, und
die zweite Eingangsstruktur (108) konfiguriert ist, um Signale bestimmter Wellenlängen von dem zweiten Eingang (104) zu bestimmten Sensoren zu leiten und / oder die zweiten Ausgangsstruktur (108) konfiguriert ist, um Signale bestimmter Wellenlängen von bestimmten Sensoren zu dem zweiten Ausgang (104) zu leiten.

2. Optisches Erfassungssystem gemäß Anspruch 1, wobei die Wellenlänge, die zu jedem Sensor (100) durch die erste Eingangsstruktur (102) geleitet wird, verschieden ist von der Wellenlänge, die zu dem gleichen Sensor (100) durch die zweite Eingangsstruktur (108) geleitet wird.

3. Optisches Erfassungssystem gemäß einem der vorhergehenden Ansprüche, wobei die erste Ausgangsstruktur (105) konfiguriert ist, um die bestimmten Wellenlängen, die zu jedem Sensor (100) durch die erste Eingangsstruktur (102) geleitet werden, von jedem Sensor zu dem ersten Ausgang (106) zu leiten.

4. Optisches Erfassungssystem gemäß einem der vorhergehenden Ansprüche, wobei die zweite Ausgangsstruktur (110) konfiguriert ist, um die bestimmten Wellenlängen, die zu jedem Sensor (100) durch die zweite Eingangsstruktur (108) geleitet werden, von jedem Sensor (100) zu dem zweiten Ausgang (107) zu leiten.

5. Optisches Erfassungssystem gemäß einem der vorhergehenden Ansprüche, wobei die erste Eingangsstruktur (102) und die erste Ausgangsstruktur (105) den gleichen optischen Aufbau aufweisen, aber in entgegengesetzten Richtungen von den Signalen in dem System durchlaufen werden.

6. Optisches Erfassungssystem gemäß einem der vorhergehenden Ansprüche, wobei die zweite Eingangsstruktur (108) und die zweite Ausgangsstruktur (110) den gleichen optischen Aufbau aufweisen, aber in entgegengesetzten Richtungen von den Signalen in dem System durchlaufen werden.

7. Optisches Erfassungssystem nach einem der vorhergehenden Ansprüche, wobei die Signalwellenlängen von der ersten und zweiten Eingangsstruktur (102, 108), die zu jedem Sensor (100) geleitet werden, ausgewählt sind aus der gleichen Gruppe von Wellenlängen, wobei jede der Gruppen von Wellenlängen zu mindestens einem Sensor (100) durch die erste Eingangsstruktur (102) und mindestens einem Sensor (100) durch die zweite Eingangsstruktur (108) geleitet wird.

8. Optisches Erfassungssystem nach einem der vorhergehenden Ansprüche, ferner umfassend eine optische Quelle, die mit dem ersten Eingang verbunden ist, die optische Quelle ist so konfiguriert, um ein optisches Signal bei jeder der Wellenlängen, die zu jedem der Sensoren durch die erste Eingangsstruktur (102) geleitet werden, bereitzustellen.

9. Optisches Erfassungssystem nach einem der vorhergehenden Ansprüche, wobei mindestens eine der Eingangs- oder Ausgangsstrukturen eine Hierarchie von wellenlängenselektiven Kopplern umfasst.

10. Optisches Erfassungssystem nach einem der vorhergehenden Ansprüche, die ferner mindestens eine Referenzeinheit umfasst, wobei eine erste Wellenlänge durch die erste Eingangsstruktur zu dieser Referenzeinheit geleitet wird und eine zweite, verschiedene, Wellenlängen durch die zweite Eingangsstruktur zu dieser Referenzeinheit geleitet wird.

11. Verfahren zum Rekonfigurieren eines optischen Erfassungssystems nach einem der Ansprüche 1 bis 10 und eine optische Quelle zum Ausgeben mehrerer Wellenlängen, die mit dem ersten Eingang gekoppelt ist, wobei das Verfahren die Schritte umfasst:
Bestimmen einer Störung in einer von den Wellenlängen der optischen Quelle und
Leiten einer Wellenlänge durch den zweiten Eingang, um Sensoren abzufragen, die vorher durch die fehlerhafte Wellenlänge durch den ersten Eingang abgefragt wurden.

12. Verfahren zum Rekonfigurieren eines optischen Erfassungssystems nach einem der Ansprüche 1 bis 10 und eine optische Quelle zum Ausgeben mehrerer Wellenlängen, die mit dem ersten Eingang gekoppelt ist, wobei das Verfahren die Schritte umfasst:
Bestimmen eines Fehlers in dem Erfassungssystem, und
Leiten einer Wellenlänge durch den zweiten Eingang, um Sensoren abzufragen, die nicht mehr über den ersten Eingang erreichbar sind.

13. Verfahren nach Anspruch 11 oder 12, wobei die Wellenlänge, die über den zweiten Eingang geleitet wird, unterschiedlich zu der Wellenlänge ist, die vorher die Sensoren durch den ersten Eingang abfragte.

14. Ein Verfahren zum Betreiben eines optischen Erfassungssystems nach einem der Ansprüche 1 bis 10, wobei das Verfahren die Schritte umfasst:
Eingeben mindestens eines ersten Signals an den ersten Eingang und eines zweiten Signals an den zweiten Eingang, wobei die erste und zweite Wellenlänge unterschiedlich sind, und so ausgewählt werden, dass sie zu dem gleichen Sensor durch die erste und zweite Eingangsstruktur geleitet werden, und
Erfassen des ersten Signals, das von dem ersten Ausgang ausgegeben wird, und des zweiten Signals, das von dem zweiten Ausgang ausgegeben wird.

## Revendications

1. Système de détection optique comprenant :
une pluralité de capteurs optiques (100),
un premier arbre d'entrée (102), chaque capteur (100) étant connecté optiquement à une première entrée optique (103) via le premier arbre d'entrée (102), dans lequel le premier arbre d'entrée (102) est configuré pour diriger des signaux de la première entrée (103) à des capteurs (100),
un premier arbre de sortie (105), chaque capteur (100) étant optiquement connecté à une première sortie optique (106) via le premier arbre de sortie (105), le premier arbre de sortie (105) étant configuré pour diriger des signaux de chaque capteur (100) à la première sortie optique (106), **caractérisé par** :
un second arbre d'entrée (108), chaque capteur (100) étant connecté optiquement à une seconde entrée optique (104) via le second arbre d'entrée (108), dans lequel le second arbre d'entrée (108) est configuré pour diriger des signaux de la seconde entrée (104) à des capteurs (100), et
un second arbre de sortie (110), chaque capteur (100) étant optiquement connecté à une seconde sortie optique (107) via le second arbre de sortie (110), le second arbre de sortie (110) étant configuré pour diriger les signaux de chaque capteur (100) à la seconde sortie optique (107), dans lequel :
le premier arbre d'entrée (102) est configuré pour diriger des signaux de longueurs d'onde particulières de la première entrée (103) à des capteurs particuliers et/ou le premier arbre de sortie (105) est configuré pour diriger des signaux de longueurs d'onde particulières de capteurs particuliers à la première sortie (106) et
le second arbre d'entrée (108) est configuré pour diriger des signaux de longueurs d'onde particulières de la seconde entrée (104) à des capteurs particuliers et/ou le second arbre de sortie (108) est configuré pour diriger des signaux de longueurs d'onde particulières de capteurs particuliers à la seconde sortie (104).

2. Système de détection optique selon la revendication 1, dans lequel la longueur d'onde dirigée sur chaque capteur (100) par le premier arbre d'entrée (102) est différente de la longueur d'onde dirigée sur le même capteur (100) par le second arbre d'entrée (108).

3. Système de détection optique selon l'une quelconque des revendications précédentes, dans lequel le premier arbre de sortie (105) est configuré pour diriger les longueurs d'onde particulières dirigées sur chaque capteur (100) par le premier arbre d'entrée (102) de chaque capteur à la première sortie (106).

4. Système de détection optique selon l'une quelconque des revendications précédentes, dans lequel le second arbre de sortie (110) est configuré pour diriger les longueurs d'onde particulières dirigées sur chaque capteur (100) par le second arbre d'entrée (108) de chaque capteur (100) à la seconde sortie (107).

5. Système de détection optique selon l'une quelconque des revendications précédentes, dans lequel le premier arbre d'entrée (102) et le premier arbre de sortie (105) ont la même structure optique, mais sont traversés dans des sens opposés par des signaux dans le système.

6. Système de détection optique selon l'une quelconque des revendications précédentes, dans lequel le second arbre d'entrée (108) et le second arbre de sortie (110) ont la même structure optique, mais sont traversés dans des sens opposés par des signaux dans le système.

7. Système de détection optique selon l'une quelconque des revendications précédentes, dans lequel les longueurs d'onde de signaux dirigés sur chaque capteur (100) par le premier et le second arbre d'entrée (102, 108) sont choisies dans le même jeu de longueurs d'onde, chacune du jeu de longueurs d'onde étant dirigée vers au moins un capteur (100) par le premier arbre d'entrée (102) et au moins un capteur (100) par le second arbre d'entrée (108).

8. Système de détection optique selon l'une quelconque des revendications précédentes, comprenant en outre une source optique connectée à la première entrée, la source optique étant configurée pour fournir un signal optique à chacune des longueurs d'onde dirigées sur des capteurs par le premier arbre d'entrée (102).

9. Système de détection optique selon l'une quelconque des revendications précédentes, dans lequel le au moins un des arbres d'entrée et de sortie comprend une hiérarchie de coupleurs sélectifs en longueurs d'onde.

10. Système de détection optique selon l'une quelconque des revendications précédentes, comprenant en outre au moins une unité de référence, dans lequel une première longueur d'onde est dirigée vers cette unité de référence par le premier arbre d'entrée et une seconde longueur d'onde différente est dirigée vers cette unité de référence par le second arbre d'entrée.

11. Procédé de reconfiguration d'un système de détection optique selon l'une quelconque des revendications 1 à 10 et d'une source optique délivrant une pluralité de longueurs d'onde couplées à la première entrée, le procédé comprenant les étapes consistant à :
déterminer une défaillance de l'une des longueurs d'onde de la source optique et
diriger une longueur d'onde via la seconde entrée pour interroger des capteurs précédemment interrogés par la longueur d'onde défaillante via la première entrée.

12. Procédé de reconfiguration d'un système de détection optique selon l'une quelconque des revendications 1 à 10 et d'une source optique délivrant une pluralité de longueurs d'onde couplées à la première entrée, comprenant les étapes consistant à :
déterminer une défaillance dans le système de détection et
diriger une longueur d'onde via la seconde entrée pour interroger des capteurs qui ne sont plus accessibles via la première entrée.

13. Procédé selon la revendication 11 ou la revendication 12, dans lequel la longueur d'onde dirigée via la seconde entrée est différente de la longueur d'onde interrogeant précédemment les capteurs via la première entrée.

14. Procédé de fonctionnement d'un système de détection optique selon l'une quelconque des revendications 1 à 10, le procédé comprenant les étapes consistant à :
saisir au moins un premier signal dans la première entrée et un second signal dans la seconde entrée, dans lequel la première et la seconde longueur d'onde sont différentes et sont choisies de sorte qu'elles soient dirigées vers le même capteur par le premier et le second arbre d'entrée et
détecter le premier signal délivré par la première sortie et le second signal délivré par la seconde sortie.
